# EUROPÄISCHE PATENTSCHRIFT

(11) **EP 2 176 083 B1**
(45) Veröffentlichungstag und Bekanntmachung des Hinweises auf die Patenterteilung: **02.01.2013**
(21) Anmeldenummer: 08784904.8
(22) Anmeldetag: 19.07.2008
(51) Int. Cl.: B60J 10/00, B60J 10/02

(54) **VORRICHTUNG ZUM VERBINDEN EINER KRAFTFAHRZEUG-FRONTSCHEIBE MIT EINEM BAUTEIL**
DEVICE FOR CONNECTING A MOTOR VEHICLE WINDSHIELD TO A COMPONENT
DISPOSITIF POUR RELIER UN PARE-BRISE DE VEHICULE AUTOMOBILE A UN ELEMENT CONSTITUTIF

(30) Priorität: 18.08.2007 DE 102007039139
(43) Veröffentlichungstag der Anmeldung: 21.04.2010
(73) Patentinhaber: RICHARD FRITZ GMBH + CO. KG, 74354 Besigheim (DE)
(72) Erfinder: HERBST, Erich, 74354 Besigheim (DE)
(74) Vertreter: Maser, Jochen
(86) Internationale Anmeldenummer: PCT/EP2008/005934
(87) Internationale Veröffentlichungsnummer: WO 2009/024222

(56) Entgegenhaltungen:
- EP-A- 0 845 347
- DE-A1- 3 413 003
- DE-A1- 3 840 287
- DE-A1- 19 837 308
- DE-U1- 20 008 555

## Beschreibung

Am unteren Rand einer Kraftfahrzeug-Frontscheibe wird in der Regel eine Wasserkastenabdeckung angebracht, mittels der das von der Frontscheibe ablaufende Regenwasser oder Spritzwasser in den eigentlichen Wasserkasten hineingeleitet wird, von dem es abfließt.

Aus der DE 200 08 555 U1 ist eine Wasserkastenabdeckung bekannt, bei der am unteren Rand der Frontscheibe an deren Unterseite ein Halteteil angeordnet ist, das an dem von der Scheibe abgekehrten Rand ein hakenförmiges Profil aufweist, das über den Scheibenrand hinausragt und sich über die gesamte Länge des Halteteils und damit zugleich des Scheibenrandes erstreckt. Die Wasserkastenabdeckung ist an der Unterseite mit einer Rippe versehen, deren Querschnittsprofil auf das hakenförmige Profil des Halteteils abgestimmt ist und das sich ebenfalls über die gesamte Länge der Wasserkastenabdeckung erstreckt. Um die Rippe der Wasserkastenabdeckung in das hakenförmige Profil des Halteteils einführen zu können, muss das hakenförmige Profil notwendigerweise ausreichend elastisch ausgebildet sein.

Bei der Montage dieser Wasserkastenabdeckung muss deren Rippe entlang der gesamten Länge in das hakenförmige Profil des Halteteils eingedrückt werden. Das ist allein schon wegen der Abmessungen der Teile recht mühsam. Wenn das hakenförmige Profil des Halteteils an seiner Unterseite nicht abgestützt ist, lässt sich nicht vermeiden, dass der freistehende Hakenteil elastisch nach unten ausweicht. Das kann dazu führen, dass die Rippe am Halteteil nur in Teilbereichen eingeclipst wird und dass dadurch die Verbindung zwischen der Wasserkastenabdeckung und dem Halteteils nur unvollständig zustande kommt. Das ist über die Unzulänglichkeit der Verbindung hinaus auch deshalb von großem Nachteil, weil infolge der Undurchsichtigkeit der Wasserkastenabdeckung und des Halteteils der Zustand der Verbindung nicht kontrolliert werden kann.

Die EP 0 845 347 A zeigt eine Vorrichtung gemäß dem Oberbegriff der Ansprüche 1 und 5.

Der Erfindung liegt die Aufgabe zugrunde, eine Verbindung zwischen der Frontscheibe und der Wasserkastenabdeckung zu schaffen, bei der die Montage erleichtert ist und die Verbindung zuverlässig erreicht wird.

Dadurch, dass bei der Vorrichtung nach Anspruch 1 die sekundären Koppelungselemente als Durchgangslöcher im zweiten Grundrissbereich des Halteteils ausgebildet sind und die primären Koppelungselemente durch Koppelungsstifte gebildet werden, die in miteinander fluchtende Durchgangslöcher sowohl des Bauteils, wie auch des Halteteils eingesteckt werden, lassen sich das Bauteil und die Halteteile besonders leicht und einfach zusammenfügen, indem das Bauteil mit seinen Durchgangslöchern einfach auf die Halteteile mit ihren Durchgangslöchern aufgelegt wird und dann in die miteinander fluchtenden Durchgangslöcher beider Teile die Koppelungsstifte so weit eingesteckt werden, dass ihr Längenabschnitt mit den Vorsprüngen aus den Halteteilen austritt und die zuvor eingedrückten Vorsprünge wieder in ihre Ausgangsstellung zurückkehren und dabei sich mit ihrer Anlagefläche an der Unterseite der Halteteile anlegen, werden das Bauteil und die Halteteile zuverlässig miteinander verriegelt. Dadurch, dass das Bauteil praktisch in seiner eigenen Ebene dem Halteteil angenähert wird, ist eine sehr große Gestaltungsfreiheit hinsichtlich der Abdichtleiste und der zugehörigen Dichtlippen sowie hinsichtlich der Gegenflächen am Halteteil gegeben.

Bei einer Weiterbildung dieser Vorrichtung nach Anspruch 2 wird durch den Kragen am Bauteil ebenfalls sichergestellt, dass das Bauteil auch ohne besonderes Zutun eine ganz bestimmte Höhenlage gegenüber dem Halteteil einnimmt.

Dadurch, dass die Vorrichtung nach Anspruch 3 weitergebildet wird, wird eine verhältnismäßig einfach herzustellende und zuverlässig wirkende Verriegelungsvorrichtung für das Bauteil geschaffen, die sich mit geringem Kraftaufwand in die Durchgangslöcher einführen und durch sie hindurchführen lässt, so dass ein Ausweichen des Halteteils nicht zu befürchten ist.

Dadurch, dass die Vorrichtung nach Anspruch 4 weitergebildet wird, erhält der zweite Grundrissbereich des Halteteils mit dem Durchgangsloch eine zusätzliche Versteifung, die noch weitergehend verhindert, dass das Halteteil unter einer Kraftwirkung nachgibt, die beim Zusammenfügen der Teile auftritt.

Bei der Vorrichtung nach Anspruch 5 ist es möglich, das Bauteil mit den Haltezapfen gegenüber den Halteteilen so zu positionieren, dass der dritte Längenabschnitt der Zapfen in der gleichen Ebene wie der zweiter Grundrissbereich der Halteteils gelegen ist, um dann durch bloßes Verschieben des Bauteils in der gemeinsamen Ebene die Koppelungszapfen in die Aussparung hineinzuschieben und damit das Bauteil mit den Halteteilen zu koppeln. Beim Einschieben der Koppelungszapfen in die Aussparung weitet die Engstelle der Aussparung sich elastisch auf, um nach dem Eintreten der Koppelungszapfen in den inneren Bereich der Aussparung wieder in ihre Ausgangslage zurückzufedern, so dass die Haltezapfen von den daran anliegenden Wandbereichen der Ausnehmung festgehalten werden.

Bei einer Weiterbildung dieser Vorrichtung nach Anspruch 6 wird eine Rastvorrichtung zwischen dem Bauteil und den Haltteilen geschaffen, die sich einerseits verhältnismäßig leicht zusammenfügen lässt und die sich andererseits beim Einwirken einer gewissen Kraft wieder lösen lässt. Bei einer alternativen Weiterbildung der Vorrichtung nach Anspruch 7 wird zwischen dem Bauteil und den Haltteilen eine Verriegelungsvorrichtung geschaffen, die sich nicht mehr ohne weiteres lösen lässt. Wenn diese Vorrichtung nach Anspruch 8 weitergebildet wird, kann durch die Sollbruchstelle am dritten Längenabschnitt dieser abgebrochen und die anschließende Anlagescheibe weggebrochen werden, so dass der restliche Längenabschnitt aus der Aussparung in axialer Richtung herausgehoben und das Bauteil in seitlicher Richtung weggezogen werden kann.

Wenn eine nach Anspruch 5 ausgestaltete Vorrichtung nach Anspruch 9 weitergebildet wird, wird das Ausrichten der beiden Anlagescheiben am Koppelungszapfen auf den Randbereich der Halteteile erleichtert.

Bei einer Weiterbildung der nach Anspruch 5 ausgestalteten Vorrichtung nach Anspruch 10 wird das Einführen der Koppelungszapfen in die zugehörige Aussparung am Halteteil erleichtert, weil die beiden Nachbarbereiche der Engstellen leichter nach auswärts federn können. Wenn diese Vorrichtung nach Anspruch 11 weiter ausgebildet wird, ist es möglich, die Schlitze auch bei stärker gekrümmtem Verlauf der Randlinie des Halteteils vorzusehen und dadurch auch eine Weiterbildung dieser Vorrichtung nach Anspruch 12 zu ermöglichen, bei der mittels der Steckleiste und ihrer Fortsätze die Nachgiebigkeit der Randbereiche der Aussparung am Halteteil aufgehoben wird, so dass die Koppelungszapfen in den Aussparungen quasi verriegelt sind. Mit einer Weiterbildung dieser Vorrichtung nach Anspruch 13 wird eine Rastvorrichtung für die Steckleiste geschaffen, die deren Halt verbessert.

Bei einer Weiterbildung nach Anspruch 14 wird das Ausrichten der Fortsätze der Steckleiste auf die Schlitze des Halteteils erleichtert.

Mit einer Weiterbildung dieser Vorrichtung nach Anspruch 15 kann die Steckleiste mit den benachbarten Teilen verklebt werden, so dass die Verriegelung der Zapfen in den Aussparungen dauerhaft ist.

Im Folgenden wird die Erfindung anhand einiger in der Zeichnung dargestellter Ausführungsbeispiele näher erläutert. Es zeigen:
- Fig. 1: eine perspektivische Ansicht einer Kraftfahrzeug-Frontscheibe mit einer Halteleiste für eine Wasserkastenabdeckung;
- Fig. 2: einen ausschnittweise dargestellten Schnitt eines ersten Ausführungsbeispieles der Frontscheibe mit einer Wasserkastenabdeckung und mit einer Vorrichtung zum Verbinden dieser Teile;
- Fig. 3: einen ausschnittweise dargestellten Schnitt eines zweiten Ausführungsbeispieles der Frontscheibe mit einer Wasserkastenabdeckung und mit einer Vorrichtung zum Verbinden dieser Teile;
- Fig. 4: eine ausschnittweise dargestellte Untersicht eines Teils der Vorrichtung gemäß Fig. 2;
- Fig. 5: eine perspektivische Ansicht eines Einzelteils der Vorrichtung gemäß Fig. 3;
- Fig. 6: einen ausschnittweise dargestellten Schnitt eines dritten Ausführungsbeispieles der Frontscheibe mit einer Wasserkastenabdeckung und mit einer Vorrichtung zum Verbinden dieser Teile;

- Fig. 7: eine perspektivische Darstellung eines Ausschnittes der Teile gemäß Fig. 5 in Explosionsdarstellung;
- Fig. 8: eine ausschnittweise dargestellte Draufsicht eines Teils der Vorrichtung gemäß Fig. 5;
- Fig. 9: eine ausschnittweise dargestellte Draufsicht eines weiteren Teils der Vorrichtung gemäß Fig. 6;
- Fig. 10: eine ausschnittweise dargestellte Draufsicht eines abgewandelten Teils der Vorrichtung ähnlich Fig. 8;
- Fig. 11: einen Vertikalschnitt des Teils der Vorrichtung gemäß Fig. 9 nach der Schnittverlaufslinie A - A in Fig. 9;
- Fig. 12: einen ausschnittweise dargestellten Schnitt eines vierten Ausführungsbeispieles der Frontscheibe mit einer Wasserkastenabdeckung und mit einer Vorrichtung zum Verbinden dieser Teile;
- Fig. 13: eine perspektivische Darstellung eines Ausschnittes der Teile gemäß Fig. 11 in Explosionsdarstellung;
- Fig. 14: eine ausschnittweise dargestellte Draufsicht eines Teils der Vorrichtung gemäß Fig. 11;
- Fig. 15: eine ausschnittweise dargestellte Seitensicht eines Teils der Vorrichtung gemäß Fig. 11;
- Fig. 16: einen Horizontalschnitt des Teils gemäß Fig. 14 nach der Schnittverlaufslinie B - B in Fig. 14.

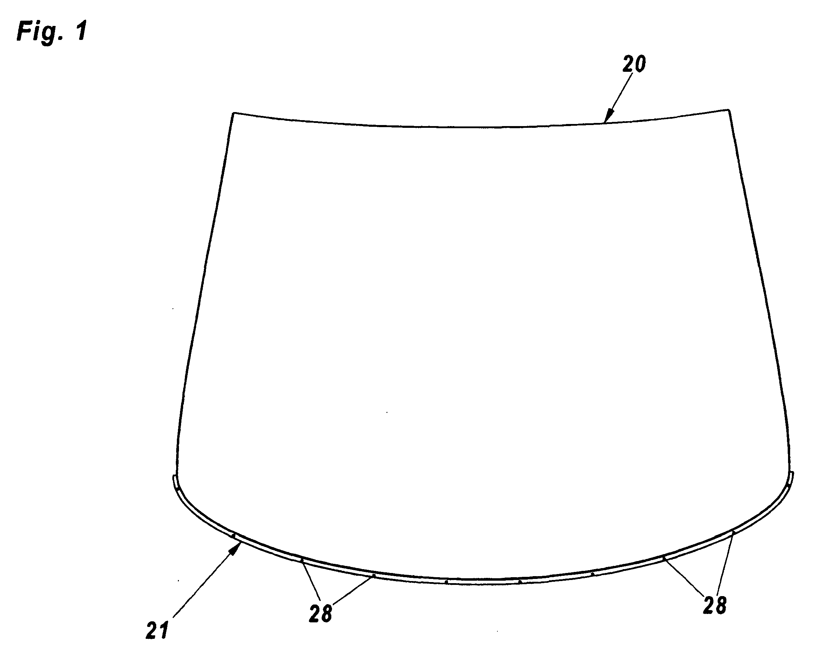

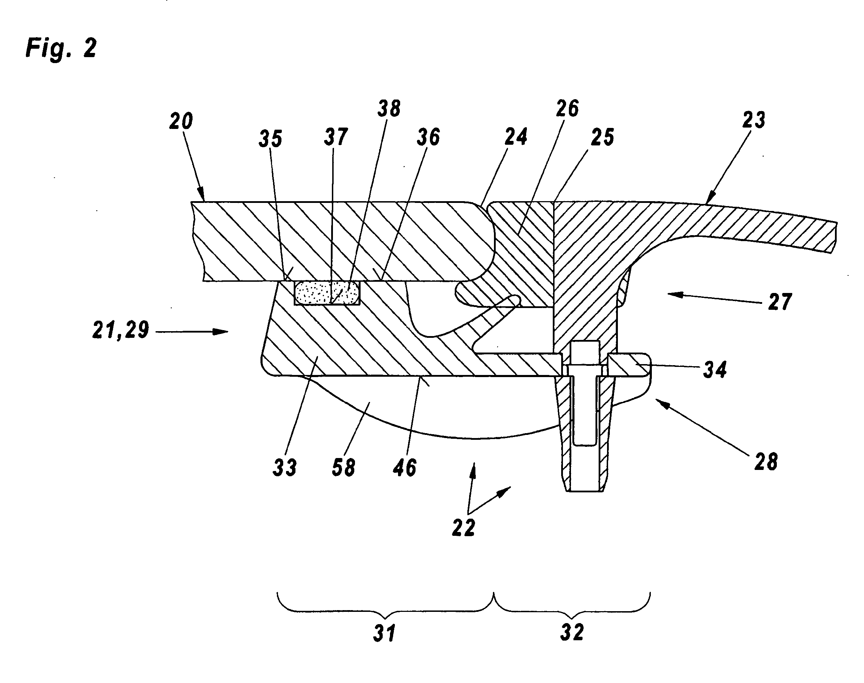

Aus Fig. 1 ist eine Kraftfahrzeug-Frontscheibe 20 in Einbaustellung zu ersehen. Sie ist mit einer Halteleiste 21 verbunden, die einen Teil einer Vorrichtung 22 (Fig. 2) bildet, mittels der die Frontscheibe 20 mit einer Wasserkasten-Abdeckung 23 (Fig. 2) gekoppelt werden kann.

Im Folgenden werden anhand Fig. 2 solche Merkmale der Vorrichtung 22 erläutert, die allen Ausführungsbeispielen gemeinsam sind.

Die Halteleiste 21 ist entlang des unteren Randes 24 der Frontscheibe 20 angeordnet und mit deren Unterseite verbunden, wie weiter unten erläutert wird.

Die Frontscheibe 20, die im Folgenden kurz als Scheibe 20 bezeichnet wird, ist in Fig. 2 der Einfachheit halber als einfache Scheibe dargstellt. Stattdessen kann auch eine Verbundglasscheibe vorgesehen sein.

Die Wasserkasten-Abdeckung 23, die im Folgenden kurz als Bauteil 23 bezeichnet wird, ist mit ihrem oberen Rand 25 dem unteren Rand 24 der Scheibe 20 eng benachbart angeordnet. Mit diesem oberen Rand 25 des Bauteils 23 ist eine Abdichtleiste 26 verbunden, und zwar daran angespritzt oder damit verklebt, die sich bis zum unteren Rand 24 der Scheibe 20 hin erstreckt und daran mit einer gewissen Vorspannung anliegt.

Der obere Rand 25 des Bauteils 23 ist auf den Randverlauf des unteren Randes 24 der Scheibe 20 abgestimmt, der im Allgemeinen räumlich gekrümmt ist. Die Längserstreckung des Bauteils 23 ist mindestens gleich derjenigen des unteren Randes 24 der Scheibe 20.

Als Teile der Vorrichtung 22 sind eine Reihe einzelner primärer Koppelungselemente 27 vorhanden, die im Bereich des oberen Randes 25 des Bauteil 23 zumindest annähernd parallel zu dessen Randlinie angeordnet sind und die nach einem bestimmten Anordnungsmuster entlang dieser Randlinie verteilt angeordnet sind. Als weitere Teile der Vorrichtung 22 sind eine der Anzahl der primären Koppelungselemente 27 gleiche Anzahl sekundärer Koppelungselemente 28 vorhanden, die auf die primären Koppelungselemente 27 des Bauteils 23 abgestimmt sind.

Jedes sekundäre Koppelungselement 28 ist an einem Halteteil 29 angeordnet, das zwei aneinander anschließende Grundrissbereiche aufweist. Der erste Grundrissbereich 31 ist unterhalb des Randbereiches der Scheibe 20 gelegen. Der zweite Grundrissbereich 32 erstreckt sich bis in den Randbereich des oberen Randes 25 des Bauteils 23 mit den primären Koppelungselementen 27 hinüber.

Die Halteteile 29 könnten entsprechend ihrer Bezeichnung einzelne selbstständige Teile sein, die entlang dem unteren Rand 24 der Scheibe 20 mit gegenseitigem Abstand nebeneinander angeordnet sind und die je eines der sekundären Koppelungselemente 28 aufweisen. Zweckmäßiger ist es jedoch, die Halteteile 29 in ihrer Gesamtheit zu der Halteleiste 21 zu vereinigen, an der alle sekundären Koppelungselemente 28 gemeinsam angeordnet sind, wie aus Fig. 1 zu ersehen ist.

Dem formalen ersten Grundrissbereich 31 der Halteleiste 21 entspricht konkret ihr erster Flächenabschnitt 33. Dem zweiten Grundrissbereich 32 entspricht ihr zweiter Flächenabschnitt 34.

Im ersten Flächenabschnitt 33 der Halteleiste 21 sind auf der der Scheibe 20 zugekehrten Seite zwei Anlageflächen 35 und 36 vorhanden, die der Anlage der Halteleiste 21 an der Scheibe 20 dienen. Zwischen den beiden Anlageflächen 35 und 36 ist eine gegenüber den Anlageflächen zurückgesetzte Klebefläche 37 vorhanden, die der Aufnahme einer Klebstoffraupe 38 dient, mittels der die Halteleiste 21 mit der Scheibe 20 dauerhaft verbunden ist. Im zweiten Flächenabschnitt 34 der Halteleiste 21 sind die sekundären Koppelungselemente 28 angeordnet und zwar jeweils in der Fluchtlinie des zugeordneten primären Koppelungselementes 27 am Bauteil 23.

Im Hinblick auf seine Halte- und Tragefunktion ist der erste Flächenabschnittes 33 mit einem höheren Querschnittsprofil ausgestattet als der zweite Flächenabschnitt 34. Ihre Außenseiten fluchten miteinander.

Sowohl das Bauteil 23 mit den primären Koppelungselementen 27 und mit der Abdichtleiste 26 wie auch die Halteleiste 21 sind aus Kunststoff hergestellt, und zwar im Allgemeinen im Spritzgussverfahren.

Im Anschluss an die allgemeiner gehaltene Darstellung derjenigen Merkmale, die bei allen Ausführungsbeispielen in gleicher Weise vorhanden sind, werden im Folgenden diejenigen Merkmale näher erläutern, die bei den verschiedenen Ausführungsbeispielen unterschiedlich sind.

Wie aus Fig. 2 zu ersehen ist, ist an der Unterseite 46 der Halteleiste 21 beiderseits eines nicht bezeichneten Durchgangsloches je eine Versteifungsrippe 58 vorhanden, die bevorzugt bei der Herstellung der Halteleiste 21 daran angeformt wird. Die Versteifungsrippen 58 erstrecken sich vom vorderen Rand des zweiten Flächenabschnittes 34 bis in den Bereich des ersten Flächenabschnittes 37 der Halteleiste 21 hinüber. Sie dienen der zusätzlichen Versteifung der Halteleiste 21, und zwar insbesondere deren vom ersten Flächenabschnitt 33 frei auskragenden zweiten Flächenabschnittes 34 gegenüber dem mit der Scheibe 20 verbundenen ersten Flächenabschnittes 37, ohne dass dafür die gesamte Halteleiste 21 dicker und schwerer ausgeführt werden muss. Die Vorrichtung 22 wird auf folgende Weise mit der Scheibe 20 verbunden.

Bei der Halteleiste 21 wird auf die Klebefläche 37 ein Haftvermittler aufgetragen. Bei der Scheibe 20 wird ein Haftvermittler an der Unterseite des Randbereiches ihres unteren Randes 24 an demjenigen Flächenabschnitt aufgetragen, der später der Klebstoffraupe 38 gegenüberliegt.

Nach dem Ablüften der Haftvermittler wird ein Klebstoff in Form der Klebstoffraupe 38 vorzugsweise an der Klebefläche 37 der Halteleiste 21 aufgetragen. Die Halteleiste 21 wird im Randbereich des unteren Randes 24 an der Unterseite der Scheibe 20 angelegt und daran angedrückt.

Nach dem Aushärten der Klebstoffraupe 38 kann die Scheibe 20 mit der Halteleiste 21 am Kraftfahrzeug eingebaut werden.

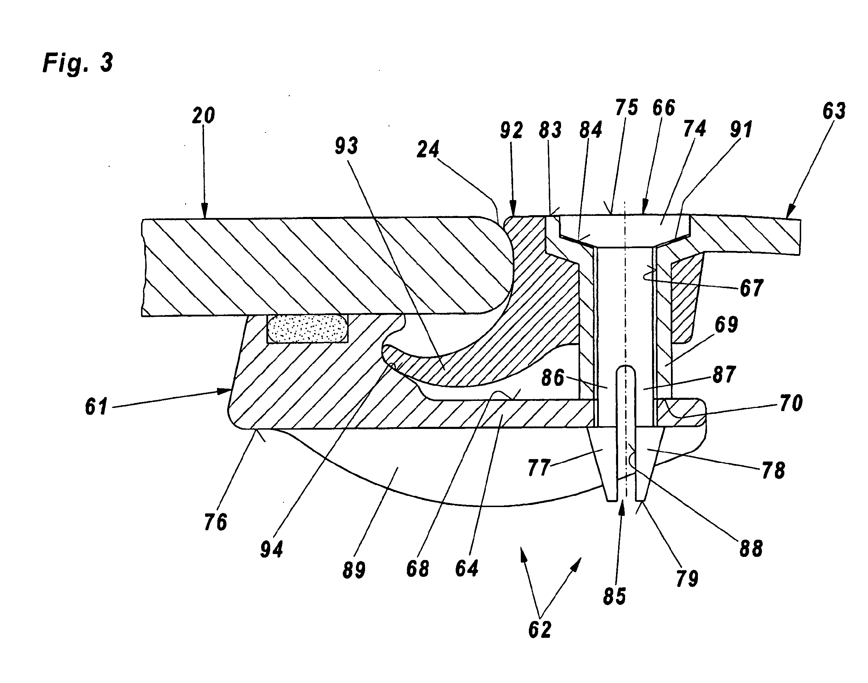

Bei dem zweiten Ausführungsbeispiel nach Fig. 3 bis Fig. 5 werden hauptsächlich diejenigen Teile näher erläutert, die sich von denjenigen des Ausführungsbeispiels nach Fig. 2 unterscheiden. Bezüglich der anderen Teile ist davon auszugehen, dass sie gleich oder zumindest ähnlich den entsprechenden Teilen des ersten Ausführungsbeispiels sind. In soweit wird auf deren vorangehende Erläuterung verwiesen.

Bei dem zweiten Ausführungsbeispiel nach Fig. 3 bis 5 ist an der Scheibe 20 die Halteleiste 61 angeordnet, die Teil der Vorrichtung 62 ist, mittels der das Bauteil 63 mit der Scheibe 20 verbunden ist.

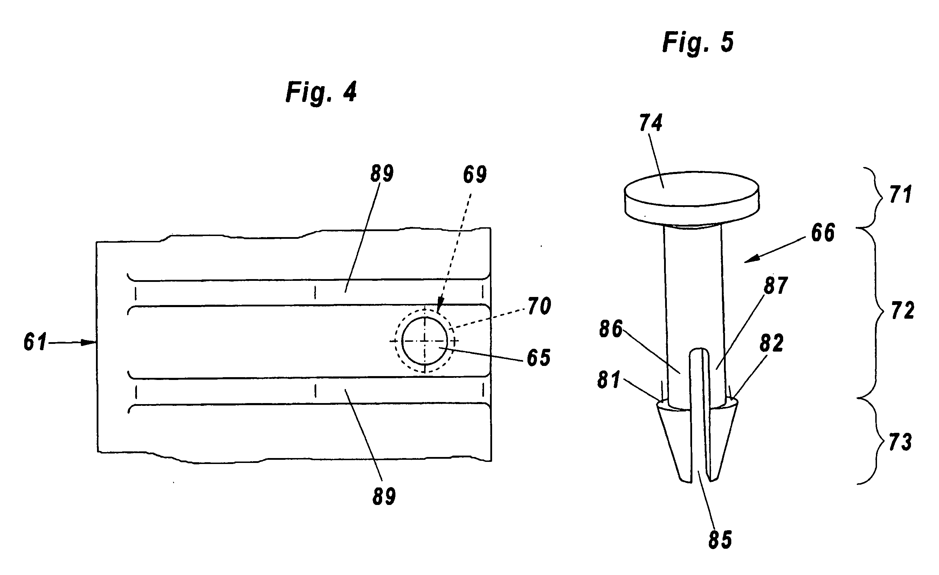

Die sekundären Koppelelemente sind am zweiten Flächenabschnitt 64 der Halteleiste 61 angeordnet und als Durchgangslöcher 65 ausgebildet (Fig. 4).

Die primären Koppelungselemente werden durch Koppelungsstifte 66 gebildet, die in ein Durchgangsloch 67 des Bauteils 63 eingesteckt werden.

An jedes Durchgangsloch 67 des Bauteils 63 schließt an dessen Unterseite ein hohler Kragen 69 mit Kreisringquerschnitt an, der sich in axialer Richtung bis zu derjenigen Ebene erstreckt, die mit der Oberseite 68 des zweiten Flächenabschnitt 64 des Halteteils 61 fluchtet. Der Kragen 69 hat innen eine lichte Weite, die gleich derjenigen des zugeordneten Durchgangsloches 67 im Bauteil 63 ist. Er hat außen einen Grundriss, der über den Grundriss des Durchgangsloches 65 in der Halteleiste 61 hinausgeht. Bei der Montage der Teile liegt die Stirnfläche 70 des Kragens 69 an der Oberseite 68 des zweiten Flächenabschnittes 64 der Halteleiste 61 auf.

Die Koppelungsstifte 66 weisen drei aneinander anschließende Längenabschnitte 71, 72 und 73 auf (Fig. 5).

Der erste Längenabschnitt 71 ist als Kopf 74 in Form einer Kreisscheibe ausgebildet. Sein Außendurchmesser ist größer als der Durchmesser des Durchgangsloches 67 im Bauteil 63 und weist eine glatte Oberseite 75 auf. Der zweite Längenabschnitt 72 erstreckt sich durch das Durchgangsloch 67 und den Kragen 69 im Bauteil 63 und durch das Durchgangsloch 65 in der Halteleiste 61 hindurch. Er hat einen Querschnitt, der auf den Grundriss der beiden Durchgangslöcher 67 und 65 abgestimmt ist. Der dritte Längenabschnitt 73 erstreckt sich um eine gewisse Strecke über die Unterseite 76 der Halteleiste 61 hinaus.

Der dritte Längenabschnitt 73 weist an zwei diametral gelegenen Umfangsstellen je einen radial federnden Vorsprung 77 bzw. 78 auf, der sich nach dem freien Ende 79 hin auf ein Maß verjüngt, das kleiner als die lichte Weite des Durchgangsloches 65 in der Halteleiste 61 ist.

Jeder der beiden Vorsprünge 77 und 78 wird in axialer Richtung von je einer ebenen Anlagefläche 81 bzw. 82 (Fig. 5) begrenzt, die dem Bauteil 63 zugekehrt ist und die parallel zu der Querschnittsebene verläuft, die mit der Unterseite 76 der Halteleiste 61 fluchtet.

Das Bauteil 63 weist im Bereich eines jeden Durchgangsloches 67 an seiner Außenseite 83 eine Aussparung 84 auf, die auf den Kopf 74 des Koppelungsstiftes 66 so abgestimmt ist, dass der Kopf 74 bündig mit der Außenseite 83 des Bauteils 63 ist.

Die Koppelungsstifte 66 weisen einen von ihrem freien Ende 79 ausgehenden diametral verlaufenden Schlitz 85 auf, der sich mindestens bis zu ihrem zweiten Längenabschnitt 72 hin erstreckt. Im Längenbereich dieses Schlitzes 85 sind die Koppelungsstifte 66 in zwei axial ausgerichtete Zungen 86 und 87 aufgeteilt, die entsprechend der Elastizität des Werkstoffes der Koppelungsstifte 66 ein- und auswärts federn können. Die Begrenzungswände 88 des Schlitzes 85 sind rechtwinklig zu der Erstreckungsrichtung der beiden Vorsprünge 77 und 78 ausgerichtet. Seine licht Weite ist mindestens so groß, dass die beiden Vorsprünge 77 und 78 beim Durchtreten durch das Durchgangsloch 67 des Bauteils 63 und das Durchgangsloch 65 der Halteleiste 61 ausreichend weit nach innen ausweichen können. Das wird dadurch unter stützt, dass der Grundriss der beiden Vorsprünge 77 und 78 auf den Grundriss der Durchgangslöcher 67 und 65 abgestimmt ist, wie in Fig. 5 angedeutet ist.

Wie aus Fig. 3 und Fig. 4 zu ersehen ist, ist an der Unterseite 76 der Halteleiste 61 beiderseits des Durchgangsloches 65 je eine Versteifungsrippe 89 vorhanden, die bevorzugt bei der Herstellung der Halteleiste 61 daran angeformt wird. Die Versteifungsrippen 89 erstrecken sich vom vorderen Rand des zweiten Flächenabschnittes 64 bis in den Bereich des ersten Flächenabschnittes der Halteleiste 61 hinüber. Sie dienen der zusätzlichen Versteifung der Halteleiste 61.

Zur Abdichtung der Durchgangslöcher 67 im Bauteil 63 wird vor dem Einstecken der Koppelungsstifte 66 entweder auf der kreisringförmigen Unterseite ihrer Köpfe 74 und/oder auf der kreisringförmigen Fläche der Aussparung 84 eine Dichtmasse 91 aufgetragen.

Der Abdichtung des Bauteils 63 gegenüber dem unteren Rand 24 der Scheibe 20 dient die Abdichtleiste 92, die am oberen Rand des Bauteils 63 angeordnet ist, und zwar daran angeformt ist. Dabei umgreift der Werkstoff der Abdichtleiste 92 zum Teil auch die am Bauteil 63 angeformten Kragen 69. Zur Verbesserung der Abdichtung ist an der Abdichtleiste 92 eine Dichtlippe 93 angeformt, die sich bis zu einem Flächenabschnitt 94 der Halteleiste 61 hin erstreckt und mit Vorspannung daran anliegt.

Das Bauteil 63 wird mittels der Vorrichtung 62 auf folgende Weise mit der Scheibe 20 verbunden.

Nachdem die Halteleiste 61 mit der Scheibe 20 auf die gleiche Weise wie bei dem ersten Ausführungsbeispiel verbunden worden ist und die Scheibe 20 mit der Halteleiste 61 am Kraftfahrzeug eingebaut worden ist, wird das Bauteil 63 an der Einbaustelle oberhalb der Halteleiste 61 so positioniert, dass die Durchgangslöcher 67 des Bauteils 63 mit den Durchgangslöchern 65 der Halteleiste 61 fluchten. Dieses Positionieren kann praktisch in einer Ebene erfolgen, die mit der Scheibe 20 fluchtet. Dabei wird die Dichtlippe 93 der Abdichtleiste 92 unter den unteren Rand 24 der Scheibe 20 geschoben und an dem Flächenabschnitt 94 der Halteleiste 61 angelegt. Das Bauteil 63 wird auf die Halteleiste 61 abgesenkt, bis seine Kragen 69 an der Oberseite 74 der Halteleiste 61 aufliegen. Nach dem Auftragen der Dichtmasse 91 werden die Koppelungsstifte 66 in die Durchgangslöcher 67 und 65 eingesteckt, bis die Vorsprünge 77 und 78 aus den Durchgangslöchern 65 der Halteleiste 61 ausgetreten sind und sich gespreizt haben. Sobald ihre Anlageflächen 81 und 82 an der Unterseite 76 der Halteleiste 61 anliegen, ist das Bauteil 63 über die Halteleiste 61 an der Scheibe 20 verankert.

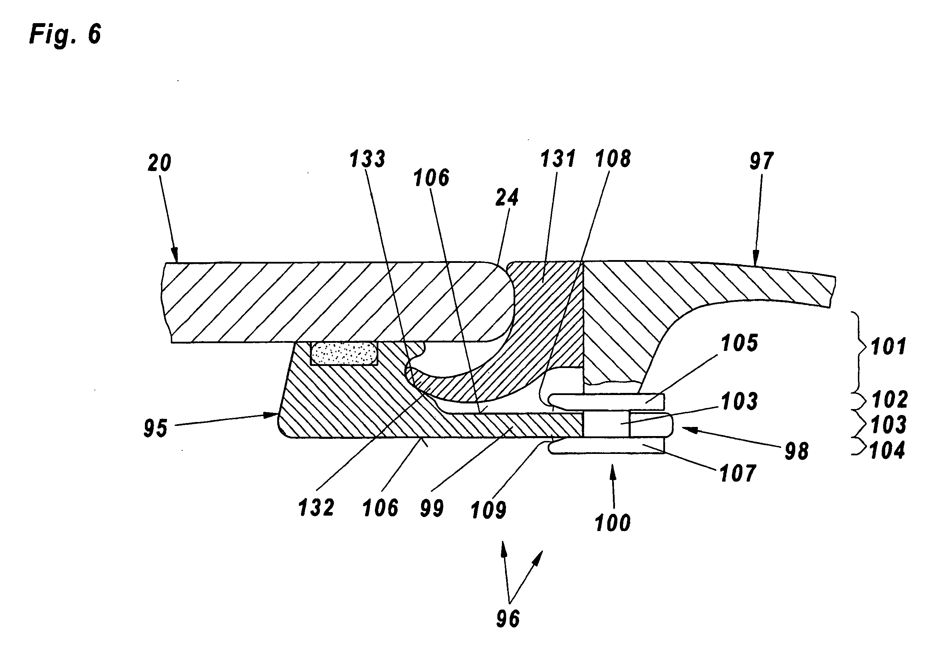

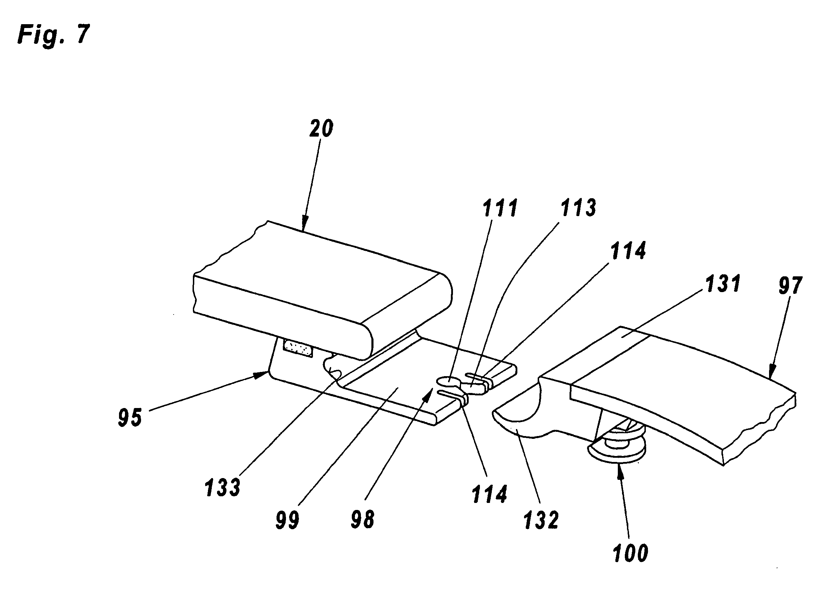

Bei dem zweiten Ausführungsbeispiel nach Fig. 3 bis Fg. 5 sind die Vorsprünge 77 und 78 als Erweiterungen der zwei axial ausgerichteten Zungen 86 und 87 ausgebildet, die aufgrund des diametral verlaufenden Schlitzes 85 einwärts federn können.
Bei dem dritten Ausführungsbeispiel nach Fig. 6 bis Fig. 9 werden hauptsächlich diejenigen Teile näher erläutert, die sich von denjenigen des ersten und des zweiten Ausführungsbeispiels unterscheiden. Bezüglich der anderen Teile ist davon auszugehen, dass sie gleich oder zumindest ähnlich den entsprechenden Teilen des ersten und/oder des zweiten Ausführungsbeispiels sind. In soweit wird auf deren vorangehende Erläuterung verwiesen.

Bei dem dritten Ausführungsbeispiel nach Fig. 6 bis 9 ist an der Scheibe 20 die Halteleiste 95 angeordnet, die Teil der Vorrichtung 96 ist, mittels der das Bauteil 97 mit der Scheibe 20 verbunden ist.

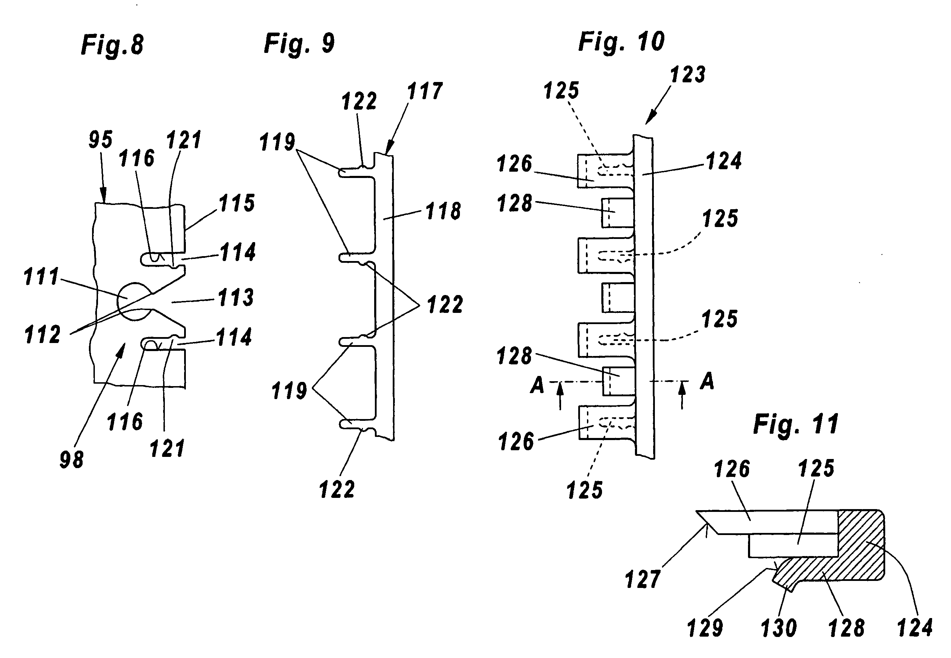

Bei der Vorrichtung 96 nach Fig. 6 bis Fig. 9 werden die primären Koppelungselemente durch Koppelungszapfen 100 gebildet, die an der Unterseite des Bauteils 97 angeformt sind. Die sekundären Koppelungselemente sind als Aussparungen 98 im Randbereich des zweiten Flächenabschnittes 99 der Halteleiste 95 ausgebildet (Fig. 8).

Jeder Koppelungszapfen 100 weist vier aneinander anschließende Längenabschnitte 101, 102, 103 und 104 auf (Fig. 6).

Der erste Längenabschnitt 101 erstreckt sich von der Unterseite des Bauteils 98 in Richtung zur Halteleiste 95 hin. Der zweite Längenabschnitt 102 ist als obere Anlagescheibe 105 ausgebildet und erstreckt sich bis zur Oberseite 106 der Halteleiste 96 hin. Der dritte Längenabschnitt 103 erstreckt sich durch die Aussparung 98 im Randbereich des zweiten Flächenabschnittes 99 der Halteleiste 95 hindurch bis mindestens zu derjenigen Ebene, die mit der Unterseite 106 der Halteleiste 95 fluchtet. Der Querschnitt dieses Längenabschnittes 103 ist auf den Grundriss der Aussparung 98 abgestimmt. Der vierte Längenabschnitt 104 ist als untere Anlagescheibe 107 ausgebildet. Sie hat von der ihr zugekehrten Seite der ersten Anlagescheibe 105 einen Abstand, der mindesten gleich der Dicke des zweiten Flächenabschnittes 99 der Halteleiste 95 im Bereich der Aussparung 98 ist.

Die beiden Anlagescheiben 105 und 107 haben einen kreisförmigen Grundriss. Der der Halteleiste 95 zugekehrten Rand der beiden Anlagescheiben 105 und 107 weist zumindest auf der einander zugekehrten Seite je eine Einführschräge 108 bzw. 109 auf.

Der dritte Längenabschnitt 103 der Koppelungszapfen 100 ist als Kreiszylinder ausgebildet. Jede Aussparung 98 an der Halteleiste 95 hat einen zumindest näherungsweise schlüssellochförmigen Grundriss (Fig. 8). Dieser Grundriss weist einen inneren Flächenabschnitt 111 auf, der die Form eines Kreisabschnittes mit einem Zentriwinkel von mehr als 180° und eine bestimmte lichte Weite hat und der in eine Engstelle 112 mit geringerer lichter Weite übergeht. Dieser Grundriss weist außerdem einen an die Engstelle 112 anschließenden äußeren Flächenabschnitt 113 in Form eines außen offenen Trapezes auf, dessen größte Weite größer als der Durchmesser des zweiten Längenabschnittes 102 der Koppelungszapfen 100 ist. Die Aussparungen 98 am Halteteil 95 sind untereinander zumindest annähernd parallel ausgerichtet,

Im Randbereich der Halteleiste 95 ist auf jeder Seite der Aussparung 98 ein Schlitz 114 angeordnet (Fig. 11). Er hat zumindest annähernd parallele Begrenzungswände 116 und erstreckt sich zumindest annähernd bis zur gleichen Tiefe wie diejenige des inneren Flächenabschnittes 111 der Aussparung 95 in den Randbereich der Halteleiste 95 hinein. Dadurch können die Nachbarbereiche der Engstelle 112 leichter elastisch ausweichen, wenn bei der Montage des Bauteils 97 der dritte Längenabschnitt 103 der Koppelungszapfen 100 durch die Engstelle 112 hindurch in den inneren Flächenabschnittes 111 der Aussparung 95 hineingeschoben wird.

Die Schlitze 114 sind je nach dem Verlauf der Randlinie 115 der Halteleiste 95 entweder insgesamt oder zumindest gruppenweise parallel zueinander ausgerichtet und dabei nach Möglichkeit rechtwinkelig zur Randlinie 115 ausgerichtet. Bei einer Aufteilung in mehr als eine Gruppe kann bei der Anordnung der Schlitze der Verlauf der Randlinie 115 der Halteleiste 95 und damit der Verlauf des unteren Randes 24 der Scheibe 20 leichter berücksichtigt werden.

Für alle Schlitze 114 oder gegebenenfalls für jede Gruppe der Schlitze 114 ist eine kammförmig ausgebildete Steckleiste 117 vorhanden, die einen Rückenteil 118 aufweist, der sich mindestens entlang des Randbereiches der Halteleiste 95 mit den Schlitzen 114 erstreckt und der für jeden Schlitz 114 einen Fortsatz 119 aufweist, der auf den Schlitze 114 abgestimmt ist.

An derjenigen Seite der Schlitze 114, die der Aussparung 98 der Halteleiste 95 benachbart ist, weist die Begrenzungswand der Halteleiste 95 einen Rücksprung 121 auf, der im Bereich des äußeren Flächenabschnittes 113 der Aussparung 98 angeordnet ist und dessen Grundriss vorzugsweise die Form eines Kreisabschnittes mit einem Zentriwinkel von weniger als 180° hat. An der dem Rücksprung 121 gegenüberliegenden Stelle der Fortsätze 119 ist ein darauf abgestimmter Vorsprung 122 angeformt. Die Rücksprünge 121 und Vorsprünge 122 bilden zusammen eine Reihe von Rastvorrichtungen zwischen der Steckleiste 117 und der Halteleiste 95, die einerseits verhindern, dass die Steckleiste 117 sich von selbst aus ihrer Betriebsstellung an der Halteleiste 95 löst und die es andererseits ermöglichen, beim Aufbringen einer gewissen Lösekraft die Steckleiste 117 bewusst abzuziehen, um danach auch das Bauteil 97 lösen zu können.

Aus Fig. 10 und Fig. 11 ist eine abgewandelte Steckleiste 123 zu ersehen. Die Abwandlung gegenüber der Steckleiste 117 besteht darin, dass im Bereich der vom Rückenteil 124 ausgehenden Fortsätze 125 an deren Oberseite je ein plattenförmiges Führungselement 126 oder kurz eine Führungsplatte 126 angeordnet ist, und zwar daran angeformt ist. Diese Führungsplatten 126 sind breiter und länger als die Fortsätze 125. An dem parallel zum Rückenteil 124 verlaufenden Rand des über die Fortsätze 125 überkragenden Flächenabschnittes der Führungsplatten 126 ist an der Unterseite eine Einführschräge 127 angeformt, die das Ausrichten der Steckleiste 123, insbesondere ihrer Fortsätze 125, auf die Ebene des Randbereiches der Halteleiste 95 erleichtert.

Neben den an der Oberseite der Fortsätze 125 angeordneten oberen Führungsplatten 126 sind zwischen den Fortsätzen 125 am Rückenteil 124 der Steckleiste 123 untere Führungsplatten 128 angeformt, die unterhalb der Ebene der Unterseite der Fortsätze 125 angeordnet sind und die kürzer als die Fortsätze 125 ausgebildet sind. An dem parallel zum Rückenteil 124 verlaufenden Rand der unteren Führungsplatten 128 ist an deren Oberseite ebenfalls eine Einführschräge 129 angeformt, die über den eigentlichen Rand der Führungsplatten 128 hinausragt und eine Art Kufe 130 bildet.

Die Unterseite der oberen Führungsplatten 126 und/oder die Oberseite der unteren Führungsplatten 128 kann zugleich als Klebefläche eingesetzt werden, an der ein Klebstoff aufgetragen wird, mittels dessen die Führungsplatten 126 und/oder 128 mit den ihnen gegenüberliegenden Flächenabschnitten des Randbereiches der Halteleiste 95 dauerhaft verbunden werden können. Damit wird verhindert, dass etwa beim Auftreten von Rüttelkräften die Steckleiste 123 sich von der Halteleiste 95 löst und dass in der Folge das Bauteil 97 sich von der Halteleiste 95 löst.

Falls beim Einsatz der Verklebung der Halteplatten dennoch die Möglichkeit gegeben sein soll, das Bauteil 97 von der Halteleiste 95 zu lösen, dann ist es zweckmäßig, dass der Klebstoff nur auf den unteren Führungsplatten 128 angebracht wird und dass außerdem ein Klebstoff verwendet wird, der nicht sehr hart wird sondern eine gewisse Nachgiebigkeit behält. Durch die Beschränkung des Klebstoffauftrages auf die unteren Führungsplatten 128 können diese erforderlichenfalls von unten her vom der Halteleiste 95 weggebogen oder notfalls vom Rückenteil 124 der Steckleiste 123 vollständig weggebrochen werden, um die Verklebung aufzuheben. Ein dafür vorgesehenes Werkzeug kann an der Kufe 130 der unteren Führungsplatten 128 leicht angesetzt werden.

Das Bauteil 97 wird mittels der Vorrichtung 96 auf folgende Weise mit der Scheibe 20 verbunden.

Nachdem die Halteleiste 95 mit der Scheibe 20 auf die gleiche Weise wie bei dem ersten und zweiten Ausführungsbeispiel verbunden worden ist und die Scheibe 20 mit der Halteleiste 95 am Kraftfahrzeug eingebaut worden ist, wird das Bauteil 97 an der Einbaustelle in der Höhe der Scheibe 20 so positioniert, dass der dritte Längenabschnitt 103 der Koppelungszapfen 100 sich auf der gleichen Höhe wie der zweite Flächenabschnitt 99 der Halteleiste 95 befindet. Das Bauteil 97 wird in dieser Höhenstellung parallel zur Scheibe 20 an die Halteleiste 95 so weit herangeschoben, dass die beiden Anlagescheiben 105 und 107 der Koppelungszapfen 100 sich oberhalb bzw. unterhalb des zweiten Flächenabschnittes 99 der Halteleiste 95 an diesem entlangbewegen und dass der dritte Längenabschnitt 103 der Koppelungszapfen 100 an der Engstelle 112 vorbei in den inneren Flächenabschnitt 111 der Aussparung 98 eintritt und an der Engstelle 112 quasi einrastet.

Beim Aufbringen der nötigen Lösekraft kann das Bauteil 97 von der Halteleiste 95 wieder gelöst, quasi ausgerastet werden. Wenn diese Verbindung dauerhaft sein soll, wird die Steckleiste 117 oder die Steckleiste 121 mit ihren Fortsätzen 119 bzw. 125 in die Schlitz 114 des Randbereiches der Halteleiste 95 eingeschoben und dadurch die elastische Nachgiebigkeit der Engstellen 112 aufgehoben, so dass das Bauteil 97 an der Halteleiste 95 praktisch verriegelt ist. Die Führungsplatten 126 und 128 an der Steckleiste 123 erleichtern das Ausrichten und Einschieben der Fortsätze 119 in die Schlitz 114 des Randbereiches der Halteleiste 95.

Aufgrund dessen, dass bei der Montage das Bauteil 97 an die Halteleiste 95 seitlich herangeschoben wird, kann die Abdichtleiste 131 am oberen Rand des Bauteils 97 ähnlich wie die Abdichtleiste 92 bei dem zweiten Ausführungsbeispiel nach Fig. 3 bis Fig. 5 ausgebildet sein und eine Dichtlippe 132 aufweisen. Bei der Montage wird die Dicht lippe 132 unter den unteren Rand der Scheibe 20 geschoben und an dem Flächenabschnitt 133 der Halteleiste 95 unter Vorspannung angelegt.

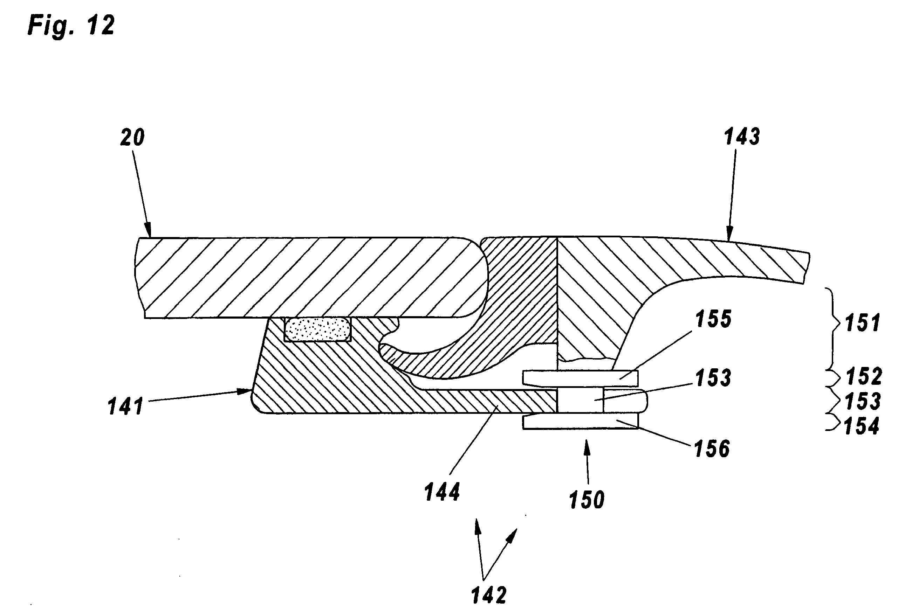

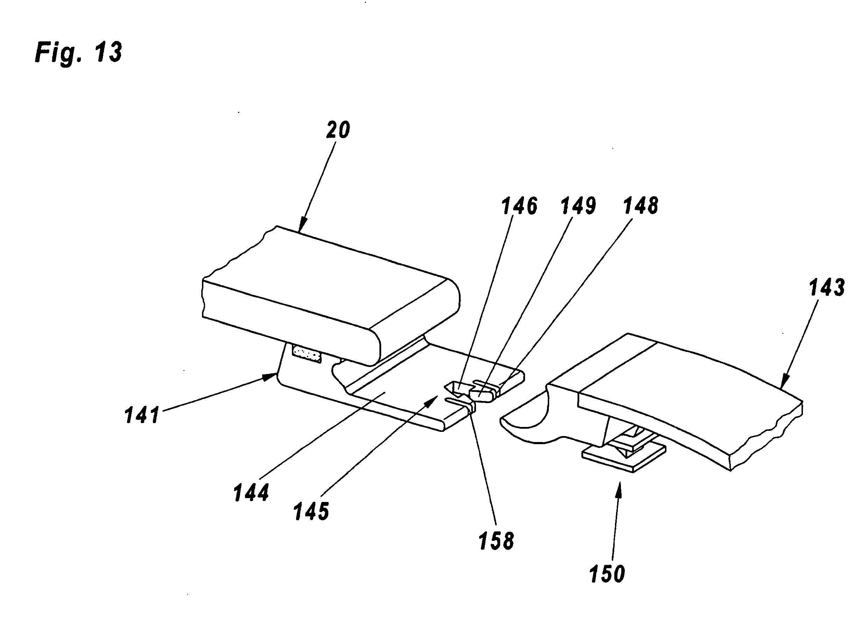

Bei dem vierten Ausführungsbeispiel nach Fig. 12 bis 16 ist an der Scheibe 20 die Halteleiste 141 angeordnet, die Teil der Vorrichtung 142 ist, mittels der das Bauteil 143 mit der Scheibe 20 verbunden ist.

Das vierte Ausführungsbeispiel ist weitgehend gleich dem dritten Ausführungsbeispiel nach Fig. 6 bis 9 ausgebildet. Daher werden im Folgenden hauptsächlich die davon abweichenden Teile näher erläutert.

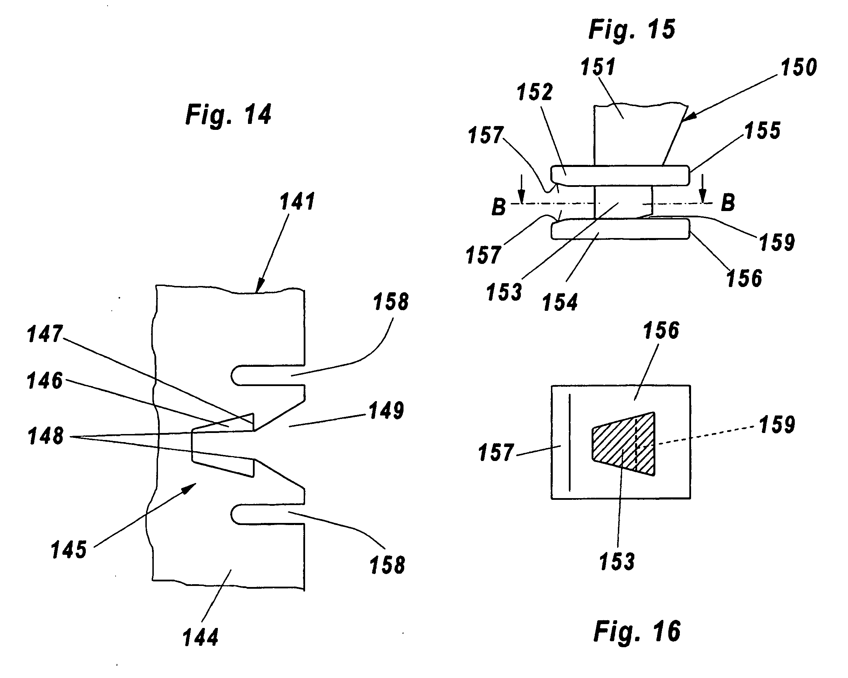

Die wichtigste Abwandlung besteht darin, dass im zweiten Flächenabschnitt 144 der Halteleiste 141 die Aussparungen 145 zwar auch einen näherungsweise schlüssellochförmigen Grundriss hat (Fig. 14), dass dessen innerer Flächenabschnitt 146 jedoch die Form eines Trapezes hat, dessen größere Parallelseite 147 in die Engstelle 148 übergeht. Der äußeren Flächenabschnitt 149 weist die Form eines nach außen offenen Trapezes auf. Beide Flächenabschnitte 144 und 149 gemeinsam haben einen Grundriss ähnlich einem Tannenbaumprofil.

Die Koppelungszapfen 150 weisen die vier aneinander anschließenden Längenabschnitte 151, 152, 153 und 154 auf (Fig. 12).

Der erste Längenabschnitt 151 ist gleich dem Längenabschnitt 101 (Fig. 6) ausgebildet. Der zweite Längenabschnitt 152 ist als obere Anlagescheibe 155 und der vierte Längenabschnitt 154 als untere Anlagescheibe 156 ausgebildet, die beide einen rechteckigen Grundriss haben. Sie haben beide am vorderen Rand auf der einander zugekehrten Seite eine Einführschräge 157. Der dritte Längenabschnitt 153 hat einen Querschnitt in Form eines Trapezes, der auf den trapezförmigen Grundriss des inneren Flächenabschnittes 146 der Aussparungen 145 abgestimmt ist.

Beiderseits der Aussparungen 145 ist je ein Schlitz 158 vorhanden, um die Nachbarbereiche der Engstelle 148 elastischer zu machen.

Das Zusammenfügen der Teile erfolgt in ähnlicher Weise wie bei dem dritten Ausführungsbeispiel. Der Unterschied besteht lediglich darin, dass infolge des trapezförmigen Querschnittes des dritten Längenabschnittes 153 der Koppelungszapfen 150 beim Eintreten dieses Längenabschnittes 153 in den ebenfalls trapezförmigen inneren Flächenabschnitt 146 der Aussparungen 145 beide Teile selbsttätig miteinander verriegelt werden. Dazu bedarf es keiner Steckleiste mit Fortsätzen für die Schlitz 158.

Wenn auch bei dem vierten Ausführungsbeispiel die Möglichkeit bestehen soll, das Bauteils 143 von der Halteleiste 141 zu lösen, um es, etwa bei einer Beschädigung, ersetzen zu können, dann ist es zweckmäßig, am dritten Längenabschnitt 153 der Koppelungszapfen 150 selbst oder an der Übergangsstelle zur unteren Anlagescheibe 156 eine Sollbruchstelle vorzusehen, die beispielsweise als parallel zum Rand der Halteleiste 141 verlaufende Kerbe 159 ausgebildet ist und die vorzugsweise an der von der Halteleiste 141 abgekehrten Seite angeordnet ist, wie in Fig. 15 und Fig. 16 angedeutet ist. Dann kann im Bedarfsfall über die untere Anlagescheibe 156 der dritte Längenabschnitt 153 der Koppelungszapfen 150 abgebrochen werden oder die untere Anlagescheibe 156 vom Längenabschnitt 153 weggebrochen werden, damit der verbleibende Längenabschnitt 153 der Koppelungszapfen 150 aus dem inneren Flächenabschnitt 146 der Aussparungen 145 in axialer Richtung herausgezogen werden kann und danach das Bauteil 143 seitlich weggezogen werden kann.

### Bezugszeichenliste

- 20: Frontscheibe/Scheibe
- 21: Halteleiste
- 22: Vorrichtung
- 23: Wasserkastenabdeckung/Bauteil
- 24: unterer Rand
- 25: oberer Rand
- 26: Dichtungsleiste
- 27: primäre Koppelungselemente
- 28: sekundäre Koppelungselemente
- 29: Halteteil

- 31: erster Grundrissbereich
- 32: zweiter Grundrissbereich
- 33: erster Flächenabschnitt
- 34: zweiter Flächenabschnitt
- 35: Anlagefläche
- 36: Anlagefläche
- 37: Klebefläche
- 38: Klebstoffraupe
- 39: Dichtlippe

- 61: Halteleiste
- 62: Vorrichtung
- 63: Bauteil
- 64: zweiter Flächenabschnitt
- 65: Durchgangslöcher
- 66: Koppelungsstifte
- 67: Durchgangsloch
- 68: Oberseite
- 69: Kragen
- 70: Stirnfläche
- 71: Längenabschnitt
- 72: Längenabschnitt
- 73: Längenabschnitt
- 74: Kopf
- 75: Oberseite
- 76: Unterseite
- 77: Vorsprung
- 78: Vorsprung
- 79: Ende

- 81: Anlagefläche
- 82: Anlagefläche
- 83: Außenseite
- 84: Aussparung
- 85: Schlitz
- 86: Zunge
- 87: Zunge
- 88: Begrenzungswände
- 89: Versteifungsrippen

- 91: Dichtmasse
- 92: Abdichtleiste
- 93: Dichtlippe
- 94: Flächenabschnitt
- 95: Halteleiste
- 96: Vorrichtung
- 97: Bauteil
- 98: Aussparungen
- 99: zweiter Flächenabschnitt

- 100: Koppelungszapfen
- 101: erster Längenabschnitt
- 102: zweiter Längenabschnitt/Anlagescheibe
- 103: dritter Längenabschnitt
- 104: vierter Längenabschnitt/Anlagescheibe
- 105: obere Anlagescheibe
- 106: Unterseite
- 107: untere Anlagescheibe
- 108: Einführschräge
- 109: Einführschräge

- 111: innerer Flächenabschnitt
- 112: Engstelle
- 113: äußerer Flächenabschnitt
- 114: Schlitz
- 115: Randlinie
- 116: Begrenzungswände
- 117: Steckleiste
- 118: Rückenteil
- 119: Fortsatz

- 121: Rücksprung
- 122: Vorsprung
- 123: Steckleiste
- 124: Rückenteil
- 125: Fortsatz
- 126: Führungsplatte
- 127: Einführschräge
- 128: Führungsplatte
- 129: Einführschräge
- 130: Kufe
- 131: Abdichtleiste
- 132: Dichtlippe
- 133: Flächenabschnitt

- 141: Halteleiste
- 142: Vorrichtung
- 143: Bauteil
- 144: zweiter Flächenabschnitt
- 145: Aussparungen
- 146: innerer Flächenabschnitt
- 147: größere Parallelseite
- 148: Engstelle
- 149: äußerer Flächenabschnitt
- 150: Koppelungszapfen
- 151: erster Längenabschnitt
- 152: zweiter Längenabschnitt
- 153: dritter Längenabschnitt
- 154: vierter Längenabschnitt
- 155: obere Anlagescheibe
- 156: untere Anlagescheibe
- 157: Einführschräge
- 158: Schlitz
- 159: Kerbe

## Patentansprüche

1. Vorrichtung zum Verbinden einer Kraftfahrzeug-Frontscheibe mit einem Bauteil, mit den Merkmalen:
- das Bauteil (63) weist einen der Frontscheibe (20) zugekehrten oberen Rand auf, der auf den Randverlauf des unteren Randes der Frontscheibe (20) abgestimmt ist,
- die Längserstreckung des Bauteils (63) ist mindestens gleich derjenigen des unteren Randes (24) der Frontscheibe (20),
- an der Unterseite des Bauteils (63) ist eine Reihe einzelner primärer Koppelungselemente vorhanden,
-- die im Bereich des oberen Randes des Bauteils (63) zumindest annähernd parallel zu dessen Randlinie angeordnet sind und
-- die nach einem bestimmten Anordnungsmuster verteilt angeordnet sind,
- es ist eine der Anzahl der primären Koppelungselemente gleiche Anzahl sekundärer Koppelungselemente vorhanden, die auf die primären Koppelungselemente des Bauteils (63) abgestimmt sind,
- jedes sekundäre Koppelungselement ist an einem Halteteil (61) angeordnet, das zwei aneinander anschließende Grundrissbereiche aufweist,
-- von denen der erste Grundrissbereich sich bis in den Randbereich des unteren Randes der Frontscheibe (20) erstreckt und damit dauerhaft verbindbar ist und
-- von denen der zweite Grundrissbereich sich bis in den Randbereich des oberen Randes des Bauteils (63) mit den primären Koppelungselementen erstreckt,
- im ersten Grundrissbereich des Halteteils (61) sind auf der der Frontscheibe (20) zugekehrten Seite vorhanden,
-- mindestens eine Anlagefläche für die Anlage des Halteteils (61) an der Frontscheibe (20) und
-- eine Klebefläche für das Anbringen eines Klebemittels,
- im zweiten Grundrissbereich des Halteteils (61) ist das sekundäre Koppelungselement in der Fluchtlinie des zugeordneten primären Koppelungselementes des Bauteils (63) angeordnet,
- an dem der Frontscheibe (20) zugekehrten Rand des Bauteils (63) ist ein Dichtungselement (92) angeordnet, das im Einbauzustand sich mindestens bis zur Frontscheibe (20) hin erstreckt,
**gekennzeichnet durch** die Merkmale
- die sekundären Koppelungselemente sind als Durchgangslöcher (65) ausgebildet, die im zweiten Grundrissbereich des Halteteils (61) angeordnet sind,
- die primären Koppelungselemente werden **durch** Koppelungsstifte (66) gebildet, die in Durchgangslöcher (67;65) sowohl des Bauteils (63) wie auch des Halteteils (61) eingesteckt sind,
- die Koppelungsstifte (66) weisen mehrere aneinander anschließende Längenabschnitte (71;72;73) auf,
- der erste Längenabschnitt (71) ist als Kopf (74) ausgebildet,
-- dessen Außendurchmesser größer als der Durchmesser der Durchgangslöcher (67) im Bauteil (63) ist und
-- der eine glatte Oberseite (75) aufweist,
- der zweite Längenabschnitt (72) erstreckt sich durch das Durchgangsloch (67) im Bauteil (63) und das Durchgangsloch (65) im Halteteil (61) hindurch und hat einen Querschnitt, der auf den Grundriss des Durchgangsloches (67) im Bauteil (63) und auf den Grundriss des Durchgangsloches (65) im Halteteil (61) abgestimmt ist,
- der dritte Längenabschnitt (73) erstreckt sich um eine gewisse Strecke über die Unterseite (76) des Halteteils (61) hinaus,
- der dritte Längenabschnitt (73) weist an einer Umfangsstelle oder an zwei einander gegenüberliegenden Umfangsstellen einen radial federnden Vorsprung (77;78) auf, der sich nach dem freien Ende (79) hin auf ein Maß verjüngt, das kleiner als die lichte Weite des Durchgangsloches (65) im Halteteil (61) ist,
- jeder Vorsprung (77;78) wird in axialer Richtung von einer ebenen Anlagefläche (81;82) begrenzt,
-- die dem Bauteil (63) zugekehrt ist und
-- die parallel zu der Querschnittsebene verläuft, die mit der Unterseite (76) des Halteteils (61) fluchet,
- das Bauteil (63) weist im Bereich eines jeden Durchgangsloches (67) an seiner Außenseite (83) eine Aussparung (84) auf, die auf den Kopf (74) des Koppelungsstiftes (66) so abgestimmt ist, dass der Kopf (74) bündig mit der Außenseite (83) des Bauteils (63) ist.

2. Vorrichtung nach Anspruch 1, mit den Merkmalen:
- an jedem Durchgangsloch (67) des Bauteils (63) schließt an dessen Unterseite ein hohler Kragen (69) an,
-- der sich in axialer Richtung bis zu derjenigen Ebene erstreckt, die mit der Oberseite (68) des Halteteils (61) fluchtet,
-- der innen eine lichte Weite hat, die gleich derjenigen des zugeordneten Durchgangsloches (67) ist, und
-- deren außen einen Grundriss hat, der über das Durchgangsloch (65) im Halteteil (61) hinausgeht.

3. Vorrichtung nach Anspruch 1, mit den Merkmalen:
- die Koppelungszapfen bzw. Koppelungsstifte (66) weisen einen von ihrem freien Ende (79) ausgehenden diametral durchgehenden Schlitz (85) auf,
-- der sich mindestens bis zu ihrem zweiten Längenabschnitt (72) hin erstreckt,
-- dessen Begrenzungswände (88) rechtwinklig zu der Erstreckungsrichtung der vorhandenen Vorsprünge (77;78) ausgerichtet sind und
-- dessen lichte Weite größer als die radiale Erstreckung der vorhandenen Vorsprünge (77;78) ist.

4. Vorrichtung nach Anspruch 1, mit den Merkmalen:
- am Halteteil (61) ist auf der Oberseite und/oder auf der Unterseite (76) seines zweiten Grundrissbereiches auf einer Seite oder auf beiden Seiten seines Durchgangsloches (67) eine Versteifungsrippe (89) vorhanden,
-- die am Halteteil (61) befestigt oder daran angeformt ist und
-- die sich bis zum ersten Grundrissbereich des Halteteils (61) hin erstreckt.

5. Vorrichtung zum Verbinden einer Kraftfahrzeug-Frontscheibe mit einem Bauteil, mit den Merkmalen:
- das Bauteil (97) weist einen der Frontscheibe (20) zugekehrten oberen Rand auf, der auf den Randverlauf des unteren Randes der Frontscheibe (20) abgestimmt ist,
- die Längserstreckung des Bauteils (97) ist mindestens gleich derjenigen des unteren Randes der Frontscheibe (20),
- an der Unterseite des Bauteils (97) ist eine Reihe einzelner primärer Koppelungselemente vorhanden,
-- die im Bereich des oberen Randes des Bauteils (97) zumindest annähernd parallel zu dessen Randlinie angeordnet sind und
-- die nach einem bestimmten Anordnungsmuster verteilt angeordnet sind,
- es ist eine der Anzahl der primären Koppelungselemente gleiche Anzahl sekundärer Koppelungselemente vorhanden, die auf die primären Koppelungselemente des Bauteils (97) abgestimmt sind,
- jedes sekundäre Koppelungselement ist an einem Halteteil (95) angeordnet, das zwei aneinander anschließende Grundrissbereiche aufweist,
-- von denen der erste Grundrissbereich sich bis in den Randbereich des unteren Randes der Frontscheibe (20) erstreckt und damit dauerhaft verbindbar ist und
-- von denen der zweite Grundrissbereich sich bis in den Randbereich des oberen Randes des Bauteils (97) mit den primären Koppelungselementen erstreckt,
- im ersten Grundrissbereich des Halteteils (95) sind auf der der Frontscheibe (20) zugekehrten Seite vorhanden,
-- mindestens eine Anlagefläche für die Anlage des Halteteils (95) an der Frontscheibe (20) und
-- eine Klebefläche für das Anbringen eines Klebemittels,
- im zweiten Grundrissbereich des Halteteils (95) ist das sekundäre Koppelungselement in der Fluchtlinie des zugeordneten primären Koppelungselementes des Bauteils (97) angeordnet,
- an dem der Frontscheibe (20) zugekehrten Rand des Bauteils (97) ist ein Dichtungselement (131) angeordnet, das im Einbauzustand sich mindestens bis zur Frontscheibe (20) hin erstreckt,
**gekennzeichnet durch** die Merkmale:
- die primären Koppelungselemente (27) werden **durch** Koppelungszapfen (100) gebildet, die an der Unterseite des Bauteils (97) befestigt oder daran angeformt sind,
- die sekundären Koppelungselemente (28) sind als Aussparungen (98) ausgebildet, die im Randbereich des zweiten Grundrissbereiches (32) des Halteteils (95) angeordnet sind,
- jeder Koppelungszapfen (100) weist vier aneinander anschließende Längenabschnitte (101,102,103,104) auf,
-- von denen der erste Längenabschnitt (101) sich von der Unterseite des Bauteils (97) in Richtung zum Halteteil (95) hin erstreckt,
-- von denen der zweite Längenabschnitt (102) als Anlagescheibe (105) ausgebildet ist und sich bis zur Oberseite (106) des Halteteils (95) hin erstreckt,
-- von denen der dritte Längenabschnitt (103) sich durch die Aussparung (98) im Randbereich des Halteteils (95) hindurch bis mindestens zu derjenigen Ebene erstreckt, die mit der Unterseite (106) des Halteteils (95) fluchtet, und dessen Querschnitt auf den Grundriss der Aussparung (98) abgestimmt ist,
-- von denen der vierte Längenabschnitt (104) wiederum als Anlagescheibe (107) ausgebildet ist und von der ihr zugekehrten Seite der ersten Anlagescheibe (105) einen Abstand hat, der mindestens gleich der Dicke des Halteteils (95) im Bereich der Aussparung (98) ist,
- jede Aussparung (98) am Halteteil (95) hat einen zumindest näherungsweise schlüssellochförmigen Grundriss,
-- der einen inneren Flächenabschnitt (111) mit einer bestimmten lichten Weite aufweist, der in eine Engstelle (112) mit geringerer lichter Weite übergeht und
-- der einen daran anschließenden äußeren Flächenabschnitt (113) in Form eines nach außen offenen Trapezes aufweist,
- die Aussparungen (98) am Halteteil (95) sind untereinander zumindest annähernd parallel ausgerichtet,
- die Engstelle (112) zwischen dem inneren und dem äußeren Flächenabschnitte (111,113) hat eine lichte Weite, die um ein von der Elastizität des Werkstoffes des dritten Längenabschnittes (103) des Koppelungszapfens (100) und des Halteteils (95) abhängiges Maß kleiner als die Außenabmessung des dritten Längenabschnittes (103) ist.

6. Vorrichtung nach Anspruch 5, mit den Merkmalen:
- der inneren Flächenabschnitt (111) der Aussparung (98) hat die Form eines Kreisabschnittes mit einem Zentriwinkel von mehr als 180° und
- der dritte Längenabschnitt (103) des Koppelungszapfen (100) hat einen kreisförmigen Querschnitt.

7. Vorrichtung nach Anspruch 5, mit den Merkmalen:
- der inneren Flächenabschnitt (146) der Aussparung (145) hat die Form eines Trapezes und
- der dritte Längenabschnitt (153) der Koppelungszapfen (150) hat einen trapezförmigen Querschnitt, der auf den inneren Flächenabschnitt (146) der Aussparung (145) abgestimmt ist.

8. Vorrichtung nach Anspruch 7, mit den Merkmalen:
- am dritten Längenabschnitt (153) der Koppelungszapfen (150) ist eine Sollbruchstelle vorhanden,
-- die auf der Seite der langen Trapezseite angeordnet ist und
-- die vorzugsweise als parallel zum Halteteil (95) ausgerichtete Kerbe (159) ausgebildet ist.

9. Vorrichtung nach Anspruch 5, mit den Merkmalen:
- der dem Halteteil (95) zugekehrten Rand der beiden Anlagescheiben (105; 107) weist zumindest auf der einander zugekehrten Seite eine Einführschräge (108; 109) auf.

10. Vorrichtung nach Anspruch 5, mit den Merkmalen:
- im Randbereich des Halteteils (95) ist mindestens auf einer Seite, bevorzugt auf beiden Seiten, einer jeden Aussparung (98) ein Schlitz (114) angeordnet,
-- der zumindest annähernd parallele Begrenzungswände (116) hat und
-- der sich zumindest annähernd bis zur gleichen Tiefe wie diejenige des inneren Flächenabschnittes (111) der Aussparung (95) in den Randbereich der Halteleiste (95) hinein erstreckt.

11. Vorrichtung nach Anspruch 10, mit den Merkmalen:
- die Schlitze (114) sind
-- je nach dem Verlauf der Randlinie (115) der Halteleiste (95) entweder insgesamt oder zumindest gruppenweise parallel zueinander ausgerichtet und
-- so weit wie möglich rechtwinkelig zur Randlinie (115) ausgerichtet,

12. Vorrichtung nach Anspruch 10 oder 11, mit den Merkmalen:
- es ist eine kammförmig ausgebildete Steckleiste (117) vorhanden,
-- die einen Rückenteil (118) aufweist, der sich mindestens entlang des Randbereiches des Halteteils (95) mit den Schlitzen (114) erstreckt und
-- die für jeden Schlitz (114) im Randbereich des Halteteils (95) einen Fortsatz (119) aufweist, der auf den Schlitze (114) abgestimmt ist.

13. Vorrichtung nach Anspruch 12, mit den Merkmalen:
- an derjenigen Seite der Schlitze (114), die der Aussparung (98) der Halteleiste (95) benachbart ist, weist die Begrenzungswand einen Rücksprung (121) auf, der im Bereich des äußeren Flächenabschnittes (113) der Aussparung (98) angeordnet ist und dessen Grundriss vorzugsweise die Form eines Kreisabschnittes mit einem Zentriwinkel von weniger als 180° hat,
- an der dem Rücksprung (121) gegenüberliegenden Stelle der Fortsätze (119) ist ein darauf abgestimmter Vorsprung (122) angeformt.

14. Vorrichtung nach Anspruch 12 oder 13, mit den Merkmalen:
- an der Steckleiste (123) sind in der Ebene oberhalb und/oder unterhalb der Fortsätze (119) Führungselemente (126; 128) angeordnet, die auf benachbarte Teile (144) des Halteteils (141) abgestimmt sind,
- an dem Halteteil (141) zugekehrten Rand der Führungselemente (126; 128) ist eine von der Innenseite ausgehende Einführschräge (127; 129) angeordnet.

15. Vorrichtung nach Anspruch 14, mit den Merkmalen:
- an der Steckleiste (123) und/oder am Halteteil sind Klebeflächen vorhanden,
-- die zumindest teilweise im gleichen Grundrissbereich gelegen sind und
-- an denen ein Klebstoff auftragbar ist.

## Claims

1. A device for connecting a motor vehicle windshield with a component, the device having the following characteristics:
- the component (63) has an upper edge that is turned towards the windshield (20) and matched with the contour of the lower edge of the windshield (20),
- the longitudinal extension of the component (63) is at least equal to that of the lower edge (24) of the windshield (20),
- on the bottom surface of the component (63), there is provided a series of individual primary coupling members,
- which are disposed in the zone of the upper edge of the component (63) and are at least approximately parallel with its contour line and
- which are disposed according to a certain distribution pattern,
- a number of secondary coupling members equal to the number of primary coupling members is provided, the secondary coupling members being matched with the primary coupling members of the component (63),
- each secondary coupling member is disposed on a retaining member (61) that has two adjacent ground plan zones,
- the first ground plan zone of which extends to the peripheral zone of the lower edge of the windshield (20) and is permanently connectible therewith, and
- the second ground plan zone of which extends to the peripheral zone of the upper edge of the component (63) having the primary coupling members,
- in the first ground plan zone of the retaining member (61), there is provided on the side turned towards the windshield (20)
- at least one contact surface for having the retaining member (61) contact the windshield (20) and
- an adhesive surface for applying an adhesive,
- in the second ground plan zone of the retaining member (61), the secondary coupling member is disposed in alignment with the corresponding primary coupling member of he component (63),
- on the edge of the component (63) turned towards the windshield (20), a sealing member (92) is disposed which, once installed, will extend at least to the windshield (20),
**characterised by** the following characteristics:
- the secondary coupling members are realised in the form of through holes (65) disposed in the second ground plan zone of the retaining member (61),
- the primary coupling members are formed by the coupling pins (66) that are inserted in the through holes (67; 65) of both the component (63) and the retaining member (61),
- the coupling pins (66) have a plurality of adjacent longitudinal portions (71; 72; 73),
- the first longitudinal portion (71) is realised in the form of a head (74),
- the external diameter of which is larger than the diameter of the through holes (67) in the component (63) and
- which has a smooth top surface (75),
- the second longitudinal portion (72) extends through the through hole (67) in the component (63) and through the through hole (65) in the retaining member (61) and has a cross-section that is matched with the ground plan of the through hole (67) in the component (63) and with the ground plan of the through hole (65) in the retaining member (61),
- the third longitudinal portion (73) extends a certain distance beyond the lower surface (76) of the retaining member (61),
- the third longitudinal portion (73) has a radially resilient projection (77; 78) formed on one peripheral point or on two opposing peripheral points and tapering towards the free end (79) to a dimension which is smaller than the inside diameter of the through hole (65) in the retaining member (61),
- each projection (77; 78) is delimited in the axial direction by a planar contact surface (81; 82)
- which is turned towards the component (63) and
- which extends parallel with the cross-sectional plane (76) which is in alignment with the bottom surface (76) of the retaining member (61),
- the component (63) has a recess (84) formed on its outer surface (83) in the region of each through hole (67) and matched with the head (74) of the coupling pin (66) in such manner that the head (74) is flush with the outer surface (83) of the component (63).

2. The device as claimed in claim 1, having the following characteristics:
- each through hole (67) of the component (63) is adjoined by a hollow collar (69) formed at the bottom thereof
- which extends in the axial direction down to the plane that is in alignment with the top surface (68) of the retaining member (61),
- which has an inside diameter which is equal to that of the corresponding through hole (67) and
- which on the outside has a ground plan shape that extends beyond the through hole (65) in the retaining member (61).

3. The device as claimed in claim 1, having the following characteristics:
- the coupling pegs or coupling pins (66) are each provided with a slot (85) beginning from the free end (79) thereof and extending diametrically there through,
- which slot extends at least to their second longitudinal portions (72),
- the delimiting walls (88) of which are oriented at a right angle with respect to the provided projections (77; 78) and
- the clearance of which is larger than the radial extension of the provided projections (77; 78).

4. The device as claimed in claim 1, having the following characteristics:
- on the top surface and/or on the bottom surface (76) of its second ground plan zone, the retaining member (61) is provided, on one side or on both sides of its through hole (67), with a stiffening rib (89),
- which is attached to, or integrally formed with, the retaining member (61) and
- which extends to the ground plan zone of the retaining member (61).

5. A device for connecting a motor vehicle windshield with a component, the device having the following characteristics:
- the component (97) has an upper edge that is turned towards the windshield (20) and matched with the contour of the lower edge of the windshield (20),
- the longitudinal extension of the component (97) is at least equal to that of the lower edge of the windshield (20),
- on the bottom surface of the component (97), there is provided a series of individual primary coupling members,
- which are disposed in the zone of the upper edge of the component (97) and are at least approximately parallel with its contour line and
- which are disposed according to a certain distribution pattern,
- a number of secondary coupling members equal to the number of primary coupling members is provided, the secondary coupling members being matched with the primary coupling members of the component (97),
- each secondary coupling member is disposed on a retaining member (95) that has two adjacent ground plan zones,
- the first ground plan zone of which extends to the peripheral zone of the lower edge of the windshield (20) and is permanently connectible therewith, and
- the second ground plan zone of which extends to the peripheral zone of the upper edge of the component (97) having the primary coupling members,
- in the first ground plan zone of the retaining member (95), there is provided on the side turned towards the windshield (20)
- at least one contact surface for having the retaining member (95) contact the windshield (20) and
- an adhesive surface for applying an adhesive,
- in the second ground plan zone of the retaining member (95), the secondary coupling member is disposed in alignment with the corresponding primary coupling member of he component (97),
- on the edge of the component (97) turned towards the windshield (20), a sealing member (131) is disposed which, once installed, will extend at least to the windshield (20),
**characterised by** the following characteristics:
- the primary coupling members (27) are formed by coupling pegs (100) which are attached to, or integrally formed with, the component (97),
- the secondary coupling members (28) are realised in the form of recesses (98) disposed in the peripheral zone of the second ground plan zone (32) of the retaining member (95),
- each coupling peg (100) has four adjacent longitudinal portions (101, 102, 103, 104),
- the first longitudinal portion (101) of which extends from the bottom surface of the component (97) towards the retaining member (95),
- the second longitudinal portion (102) of which is realised in the form of a contact disc (105) and extends to the top surface (106) of the retaining member (95),
- the third longitudinal portion (103) of which extends through the recess (98) in the peripheral zone of the retaining member (95) to at least the plane which is in alignment with the bottom surface (106) of the retaining member (95) and the cross-section of which is matched with the ground plan shape of the recess (98),
- the forth longitudinal portion (104) of which is again realised in the form of a contact disc (107) and is spaced apart from the face of the first contact disc (105) turned towards it by a distance that is at least equal to the thickness of the retaining member (95) in the zone of the recess (98),
- each recess (98) on the retaining member (95) has an at least approximately keyhole-shaped ground plan,
- which has an inner surface portion (111) with a certain inside diameter which transitions into a narrow (112) having a smaller clearance and
- which has an outer surface portion (113) adjacent thereto and in the shape of a trapezium open towards the outside,
- the recesses (98) on the retaining member (95) are oriented at least approximately parallel with each other,
- the narrow (112) between the inner and outer surface portions (111, 113) has a clearance that is smaller than the outer dimension of the third longitudinal portion (103) by an amount depending on the elasticity of the material of the third longitudinal portion (103) of the coupling peg (100) and of that of the retaining member (95).

6. The device as claimed in claim 5, having the following characteristics:
- the inner surface portion (111) of the recess (98) has the shape of a segment of a circle with a central angle of more than 180° and
- the third longitudinal portion (103) of the coupling peg (100) has a circular cross-section.

7. The device as claimed in claim 5, having the following characteristics:
- the inner surface portion (146) of the recess (145) has the shape of a trapezium and
- the third longitudinal portion (153) of the coupling peg (150) has a trapezoidal cross-section that is matched with the inner surface portion (146) of the recess (145).

8. The device as claimed in claim 7, having the following characteristics:
- the third longitudinal portion (153) of the coupling peg (150) is provided with a breaking point
- which is disposed on the side of the long trapezium side and
- which is preferably realised in the form of a notch (159) oriented parallel with respect to the retaining member (95).

9. The device as claimed in claim 5, having the following characteristics:
- the edges of the two contact discs (105; 107) turned towards the retaining member (95) are respectively provided with an insertion chamfer (108; 109) formed at least on the faces thereof turned towards each other.

10. The device as claimed in claim 5, having the following characteristics:
- in the peripheral zone of the retaining member (95), at least on one side, preferably on both sides, of each recess (98), a slot (114) is provided
- which has at least approximately parallel delimiting walls (116) and
- which extends at least approximately to the same depth as that of the inner surface portion (111) of the recess (95) into the peripheral zone of the retaining bar (95).

11. The device as claimed in claim 10, having the following characteristics:
- the slots (114) are
- oriented parallel with each other either in their entirety or at least in groups, depending on the shape of the contour line (115) of the retaining bar (95) and
- oriented as far as possible at a right angle with respect to the contour line (115),

12. The device as claimed in claim 10 or 11, having the following characteristics:
- a comb-shaped plug-in bar (117) is provided,
- which has a back portion (118) which extends at least along a peripheral zone of the retaining member (95) provided with the slots (114) and
- which has an extension (119) for each slot (114) formed in the peripheral zone of the retaining member (95), said extension being matched with the slot (114).

13. The device as claimed in claim 12, having the following characteristics:
- on the side of the slots (114) adjoining the recess (98) of the retaining bar (95), the delimiting wall has a retreat (121) which is disposed in the zone of the outer surface portion (113) of the recess (98) and the ground plan of which preferably has the shape of a segment of a circle with a central angle of less than 180°,
- at the location of the extensions (119) opposing the retreat (121), a projection (122) is integrally formed which is matched with said retreat.

14. The device as claimed in claim 12 or 13, having the following characteristics:
- on the plug-in bar (123), guide members (126; 128) are disposed in the plane above and/or below the extensions (119) and are matched with neighbouring parts (144) of the retaining member (141),
- on the edges of the guide members (126; 128) turned towards the retaining member (141), insertion chamfers (127; 129) originating from the respective inner surfaces are provided.

15. The device as claimed in claim 14, having the following characteristics:
- on the plug-in bar (123) and/or on the retaining member, adhesion surfaces are provided
- which are situated at least partially in the same ground plan zone and
- on which an adhesive may be applied.

## Revendications

1. Dispositif destiné à relier un pare-brise de véhicule automobile à un élément constitutif, avec les caractéristiques suivantes:
- l'élément constitutif (63) présente un bord supérieur qui est tourné vers le pare-brise (20) et qui concorde avec le tracé du bord inférieur du pare-brise (20),
- l'extension longitudinale de l'élément constitutif (63) est au moins égale à celle du bord inférieur (24) du pare-brise (20),
- il existe sur la face inférieure de l'élément constitutif (63) une rangée d'éléments de couplage primaires individuels
- qui sont disposés dans la zone du bord supérieur de l'élément constitutif (63) au moins de manière sensiblement parallèle au contour de celui-ci et
- qui sont répartis selon un arrangement déterminé,
- il existe des éléments de couplage secondaires dont le nombre est égal au nombre d'éléments de couplage primaires et qui concordent avec les éléments de couplage primaires de l'élément constitutif (63),
- chaque élément de couplage secondaire est disposé sur un élément de retenue (61) qui présente deux zones de plan contiguës,
- la première zone de plan s'étendant jusque dans la partie périphérique du bord inférieur du pare-brise (20) et pouvant être liée de manière durable à celui-ci, et
- la deuxième zone de plan s'étendant jusque dans la partie périphérique du bord supérieur de l'élément constitutif (63) comportant les éléments de couplage primaires,
- il existe dans la première zone de plan de l'élément de retenue (61), sur le côté tourné vers le pare-brise (20)
- au moins une surface d'appui permettant à l'élément de retenue (61) de prendre appui contre le pare-brise (20), et
- une surface d'adhésion permettant l'application d'une colle,
- dans la deuxième zone de plan de l'élément de retenue (61) est disposé l'élément de couplage secondaire, et ce dans l'alignement de l'élément de couplage primaire correspondant de l'élément constitutif (63),
- sur le bord de l'élément constitutif (63) tourné vers le pare-brise (20) est disposé un élément d'étanchéité (92) qui s'étend, à l'état monté, au moins jusqu'au pare-brise (20),
**caractérisé par** les caractéristiques suivantes:
- les éléments de couplage secondaires sont réalisés sous forme de trous de passage (65) qui sont disposés dans la deuxième zone de plan de l'élément de retenue (61),
- les éléments de couplage primaires sont formés par des broches de couplage (66) qui sont insérées dans des trous de passage (67; 65) aussi bien de l'élément constitutif (63) que de l'élément de retenue (61),
- les broches de couplage (66) présentent plusieurs parties longitudinales contiguës (71; 72; 73),
- la première partie longitudinale (71) est réalisée en tant que tête (74)
- dont le diamètre extérieur est supérieur au diamètre des trous de passage (67) ménagés dans l'élément constitutif (63), et
- qui présente une face supérieure lisse (75),
- la deuxième partie longitudinale (72) s'étend à travers le trou de passage (67) ménagé dans l'élément constitutif (63) et le trou de passage (65) ménagé dans l'élément de retenue (61) et a une coupe transversale qui concorde avec le plan du trou de passage (67) ménagé dans l'élément constitutif (63) et avec le plan du trou de passage (65) ménagé dans l'élément de retenue (61),
- la troisième partie longitudinale (73) s'étend sur une certaine distance au-delà de la face inférieure (76) de l'élément de retenue (61),
- la troisième partie longitudinale (73) présente, sur un point de sa circonférence ou sur deux points de sa circonférence opposés l'un à l'autre, une saillie (77; 78) radialement élastique qui s'amincit vers l'extrémité libre (79) de sorte à être inférieure au diamètre intérieur du trou de passage (65) ménagé dans l'élément de retenue (61),
- chaque saillie (77; 78) est limitée en sens axial par une surface d'appui plane (81; 82)
- qui est tournée vers l'élément constitutif (63), et
- qui s'étend parallèlement au plan de la section transversale
qui est en ligne avec la face inférieure (76) de l'élément de retenue (61).
- l'élément constitutif (63) présente dans la zone de chaque trou de passage (67), sur sa face extérieure (83), un évidement (84) qui concorde avec la tête (74) de la broche de couplage (66) de sorte que la tête (74) forme une surface plane avec la face extérieure (83) de l'élément constitutif (63).

2. Dispositif selon la revendication 1, avec les caractéristiques suivantes:
- à chaque trou de passage (67) de l'élément constitutif (63) est prévu de manière contiguë à la face inférieure un col creux (69)
- qui s'étend en sens axial jusqu'au plan qui est en ligne avec la face supérieure (68) de l'élément de retenue (61),
- qui possède, à l'intérieur, un diamètre intérieur qui est égal à celui du trou de passage (67) correspondant, et
- qui possède, à l'extérieur, un plan qui dépasse le trou de passage (65) ménagé dans l'élément de retenue (61).

3. Dispositif selon la revendication 1, avec les caractéristiques suivantes:
- les tenons de couplage ou broches de couplage (66) présentent une fente (85) diamétralement traversant, partant de leur extrémité libre (79)
- qui s'étend au moins jusqu'à leur deuxième partie longitudinale (72),
- dont les parois de délimitation (88) forment un angle droit par rapport à la direction d'extension des saillies existantes (77; 78) et
- dont la largeur intérieure est supérieure à l'extension radiale des saillies existantes (77; 78).

4. Dispositif selon la revendication 1, avec les caractéristiques suivantes:
- il existe sur l'élément de retenue (61), à savoir sur la face supérieure et/ou sur la face inférieure (76) de sa deuxième zone de plan, sur un côté ou des deux côtés de son trou traversant (67) une nervure raidisseuse (89)
- qui est fixée sur l'élément de retenue (61) ou moulée d'une seule pièce avec celui-ci, et
- qui s'étend jusqu'à la première zone de plan de l'élément de retenue (61).

5. Dispositif destiné à relier un pare-brise de véhicule automobile à un élément constitutif, avec les caractéristiques suivantes:
- l'élément constitutif (97) présente un bord supérieur qui est tourné vers le pare-brise (20) et qui concorde avec le tracé du bord inférieur du pare-brise (20),
- l'extension longitudinale de l'élément constitutif (97) est au moins égale à celle du bord inférieur du pare-brise (20),
- il existe sur la face inférieure de l'élément constitutif (97) une rangée d'éléments de couplage primaires individuels
- qui sont disposés dans la zone du bord supérieur de l'élément constitutif (97) au moins de manière sensiblement parallèle au contour de celui-ci, et
- qui sont répartis selon un arrangement déterminé,
- il existe des éléments de couplage secondaires dont le nombre est égal au nombre d'éléments de couplage primaires, et qui concordent avec les éléments de couplage primaires de l'élément constitutif (97),
- chaque élément de couplage secondaire est disposé sur un élément de retenue (95) qui présente deux zones de plan contiguës,
- la première zone de plan s'étendant jusque dans la partie périphérique du bord inférieur du pare-brise (20) et pouvant être liée de manière durable à celui-ci, et
- la deuxième zone de plan s'étendant jusque dans la partie périphérique du bord supérieur de l'élément constitutif (97) comportant les éléments de couplage primaires,
- il existe dans la première zone de plan de l'élément de retenue (95), sur le côté tourné vers le pare-brise (20),
- au moins une surface d'appui permettant à l'élément de retenue (95) de prendre appui contre le pare-brise (20), et
- une surface d'adhésion permettant l'application d'une colle,
- dans la deuxième zone de plan de l'élément de retenue (95) est disposé l'élément de couplage secondaire, et ce dans l'alignement de l'élément de couplage primaire correspondant de l'élément constitutif (97),
- sur le bord de l'élément constitutif (97) tourné vers le pare-brise (20) est disposé un élément d'étanchéité (131) qui s'étend, à l'état monté, au moins jusqu'au pare-brise (20),
**caractérisé par** les caractéristiques suivantes:
- les éléments de couplage primaires (27) sont formés par des tenons de couplage (100) qui sont fixés sur la face inférieure de l'élément constitutif (97) ou moulés d'une seule pièce avec celui-ci,
- les éléments de couplage secondaires (28) sont réalisés sous forme d'évidements (98) qui sont disposés dans la partie périphérique de la deuxième zone de plan (32) de l'élément de retenue (95),
- chaque tenon de couplage (100) présente quatre parties longitudinales contiguës (101, 102, 103, 104),
- la première partie longitudinale (101) s'étendant à partir de la face inférieure de l'élément constitutif (97) en direction de l'élément de retenue (95),
- la deuxième partie longitudinale (102) étant réalisée sous forme de disque d'appui (105) et s'étendant jusqu'à la face supérieure (106) de l'élément de retenue (95),
- la troisième partie longitudinale (103) s'étendant à travers l'évidement (98) dans la partie périphérique de l'élément de retenue (95) jusqu'au moins au plan qui est en ligne avec la face inférieure (106) de l'élément de retenue (95) et dont la coupe transversale concorde avec le plan de l'évidement (98),
- la quatrième partie longitudinale (104) étant réalisée, elle aussi, sous forme de disque d'appui (107) et ayant par rapport à la face du premier disque d'appui (105) tournée vers lui un écart qui est au moins égal à l'épaisseur de l'élément de retenue (95) dans la zone de l'évidement (98),
- chaque évidement (98) ménagé dans l'élément de retenue (95) a un plan au moins sensiblement en forme de trou de serrure
- qui présente une partie de surface intérieure (111) avec un diamètre intérieur déterminé qui se transforme graduellement en un point d'étranglement (112) avec une largeur intérieure plus faible, et
- qui présente une partie de surface extérieure (113) contiguë à cette dernière, ayant la forme d'un trapèze ouvert vers l'extérieur,
- les évidements (98) ménagés dans l'élément de retenue (95) sont disposés au moins de manière sensiblement parallèle entre eux,
- le point d'étranglement (112) entre la partie de surface intérieure (111) et la partie de surface extérieure (113) possède une largeur intérieure qui est inférieure aux dimensions extérieures de la troisième partie longitudinale (103), et ce dans une mesure dépendant de l'élasticité du matériau de la troisième partie longitudinale (103) du tenon de couplage (100) et de celui de l'élément de retenue (95).

6. Dispositif selon la revendication 5, avec les caractéristiques suivantes:
- la partie de surface intérieure (111) de l'évidement (98) a la forme d'un segment de cercle avec un angle au centre supérieur à 180°, et
- la troisième partie longitudinale (103) du tenon de couplage (100) a une coupe transversale circulaire.

7. Dispositif selon la revendication 5, avec les caractéristiques suivantes:
- la partie de surface intérieure (146) de l'évidement (145) a la forme d'un trapèze, et
- la troisième partie longitudinale (153) des tenons de couplage (150) a une coupe transversale trapézoïdale qui concorde avec la partie de surface intérieure (146) de l'évidement (145).

8. Dispositif selon la revendication 7, avec les caractéristiques suivantes:
- il existe sur la troisième partie longitudinale (153) des tenons de couplage (150) un point destiné à la rupture
- qui est disposé du côté du côté long du trapèze, et
- qui est de préférence réalisé sous forme d'encoche (159) disposée parallèlement à l'élément de retenue (95).

9. Dispositif selon la revendication 5, avec les caractéristiques suivantes:
- les bords des deux disques d'appui (105; 107) tournés vers l'élément de retenue (95) présentent au moins,une inclinaison d'insertion située respectivement (108; 109) sur les côtés se faisant face.

10. Dispositif selon la revendication 5, avec les caractéristiques suivantes:
- dans la partie périphérique de l'élément de retenue (95) est disposée au moins sur un côté, de préférence des deux côtés, de chaque évidement (98) une fente (114)
- qui a des parois de délimitation (116) au moins sensiblement parallèles, et
- qui s'étend au moins sensiblement jusqu'à la même profondeur que celle de la partie de surface intérieure (111) de l'évidement (95) dans la partie périphérique de la baguette de retenue (95).

11. Dispositif selon la revendication 10, avec les caractéristiques suivantes:
- les fentes (114) sont orientées
- parallèlement les unes aux autres soit dans leur totalité soit au moins par groupes, et ce en fonction du tracé du contour (115) de la baguette de retenue (95),
- autant que possible à angle droit par rapport au contour (115).

12. Dispositif selon la revendication 10 ou 11, avec les caractéristiques suivantes:
- il existe une baguette enfichable (117) réalisée en forme de peigne
- qui présente un dos (118) qui s'étend au moins le long de la partie périphérique de l'élément de retenue (95) comportant les fentes (114), et
- qui présente un prolongement (119) pour chaque fente (114) ménagée dans la partie périphérique de l'élément de retenue (95), lequel concorde avec la fente (114).

13. Dispositif selon la revendication 12, avec les caractéristiques suivantes:
- la paroi de délimitation présente, du côté des fentes (114) qui avoisinent l'évidement (98) de la baguette de retenue (95), un retrait (121) qui est disposé dans la zone de la partie de surface extérieure (113) de l'évidement (98) et dont le plan a de préférence la forme d'un segment de cercle avec un angle au centre inférieur à 180°,
- sur les prolongements (119), à l'emplacement faisant face au retrait (121) est formée une saillie (122) moulée d'une pièce et concordant avec celui-ci.

14. Dispositif selon la revendication 12 ou 13, avec les caractéristiques suivantes:
- sur la baguette enfichable (123) sont disposés, dans le plan au-dessus et/ou au-dessous des prolongements (119), des éléments de guidage (126; 128) qui concordent avec des éléments (144) voisins de l'élément de retenue (141),
- sur le bord des éléments de guidage (126; 128) qui est tourné vers l'élément de retenue (141) est disposée une inclinaison d'insertion (127; 129) qui part de la face intérieure.

15. Dispositif selon la revendication 14, avec les caractéristiques suivantes:
- il existe sur la baguette enfichable (123) et/ou sur l'élément de retenue des surfaces d'adhésion
- qui sont situées au moins partiellement dans la même zone de plan et
- sur lesquelles il est possible d'appliquer une colle.
